# EUROPÄISCHE PATENTSCHRIFT

(11) **EP 1 790 999 B1**
(45) Veröffentlichungstag und Bekanntmachung des Hinweises auf die Patenterteilung: **08.10.2008**
(21) Anmeldenummer: 06022272.6
(22) Anmeldetag: 25.10.2006
(51) Int. Cl.: G01V 8/20

(54) **Lichtgitter**
Light grid
Barrière lumineuse

(30) Priorität: 24.11.2005 DE 102005056000
(43) Veröffentlichungstag der Anmeldung: 30.05.2007
(73) Patentinhaber: SICK AG, 79183 Waldkirch (DE)
(72) Erfinder: Allgeier, Simon, 79104 Freiburg (DE)
(74) Vertreter: Ludewigt, Christoph

(56) Entgegenhaltungen:
- DE-A1- 10 227 710
- DE-C1- 19 510 304

## Beschreibung

Die Erfindung betrifft eine Vorrichtung nach dem Oberbegriff des Anspruchs 1 sowie ein Verfahren nach dem Oberbegriff des Anspruchs 5.

Derartige Lichtschrankengitter sind aus der DE 38 03 033 C2 bekannt. Das beschriebene Lichtschrankengitter weist mehrere nebeneinander angeordnete Lichtempfänger auf, die mehrere zusammenarbeitende Paare bilden. Die Paare bestehen aus je einer Lichtquelle, je einem Lichtempfänger und einer Lichtquellensteuerung sowie einer Empfängersteuerung. Die Lichtquellen und Lichtempfänger sind zur Abgabe und zum Empfang von Lichtimpulsen jeweils einzeln zeitlich nacheinander und zyklisch aktivierbar. Die Aktivierung der Lichtempfänger für einen zur Abgabe synchronen Empfang von Lichtimpulsen erfolgt in Abhängigkeit von den empfangenen Lichtimpulsen. Die Lichtquellensteuerung und die Empfängersteuerung sind ohne einen besonderen Synchronisationspfad aufweisend elektrisch voneinander entkoppelt. Dabei weist die Lichtquellensteuerung jeweils zwischen der Ansteuerung der im Zyklus letzten und der im Zyklus ersten Lichtquelle eine Synchronisationspause auf. Die Empfängersteuerung ist in Abhängigkeit vom Auftreten der Synchronisierpause auf den hinsichtlich des Zyklus ersten Lichtempfänger zurücksetzbar.

Diese Lichtschrankengitter mit mehreren nebeneinander angeordneten Lichtquellen weisen jedoch wesentliche Nachteile auf.

Wird z. B. der erste oder letzte Strahl eines Paares des Lichtschrankengitters durch ein Objekt abgedeckt, so vergrößert sich die Synchronisationspause um die Zeit des verdeckten Strahls und es ist keine Synchronisation zu den Lichtquellen mehr möglich. Dies führt dazu, dass nach jeder Abdeckung des ersten oder letzten Strahls das Lichtschrankengitter neu synchronisiert werden muss. Eine neue Synchronisation der Lichtquellen und Lichtempfänger benötigt Zeit, in der kein bestimmungsgemäßer Betrieb zum Erkennen von Objekten mit Hilfe des Lichtschrankengitters möglich ist. Somit führt auch eine Verschmutzung des Lichtschrankengitters, insbesondere des ersten und letzten Strahls, zu Verfügbarkeitsproblemen.

Eine Detektierung einer einzigen Synchronisationspause ist fehleranfällig und kann schon durch eine einzige Zeitabweichung in dem Lichtschrankengitter verfälscht werden. Durch Hinzufügen der Synchronisationspause wird die Zeit zwischen zwei Zyklen auch zusätzlich verlängert. Dies führt zu einer erhöhten Zykluszeit und dadurch zu einer höheren Ansprechzeit und damit zu einer längeren Abschaltzeit bei einem Eingriff in das Lichtschrankengitter.

Durch den Verlust der Synchronisation bei einer Unterbrechung des ersten und letzten Strahls eignet sich das Lichtschrankengitter nicht zur Vermessung von Objekten, wobei mehrere Lichtstrahlen, insbesondere der erste und letzte Lichtstrahl, unterbrochen werden.

Der Erfindung liegt die Aufgabe zugrunde, ein verbessertes Lichtgitter bereitzustellen, sowie ein Verfahren zum Synchronisieren von Sender- und Empfängereinheit eines Lichtgitters.

Der auf eine Vorrichtung gerichtete Teil der Aufgabe wird erfindungsgemäß durch die kennzeichnenden Merkmale des Anspruchs 1 gelöst.

Im Sinne der Erfindung ist eine Synchronisationspause eine Zeitspanne zwischen Sendeimpulsen zweier im Zyklus benachbarter Sendeimpulse, die eine andere Dauer hat, als die restlichen Pausen zwischen den Sendeimpulsen, die typischerweise untereinander die gleiche Länge haben.

Durch die Verwendung von mindestens zwei unterschiedlichen Synchronisationspausen können alle durch die Sendeimpulse gebildeten Lichtstrahlen der Sendeeinheit, bis auf wenigstens zwei, abgedeckt werden, wobei zumindest einer der nicht abgedeckten Sendeimpulse einer der ersten oder zweiten Sendeimpulse sein muss. Dann bleibt trotz der Abdeckung die optische Synchronisation des Lichtgitters aufrechterhalten. Die Summe der beiden Synchronisationspausenzeiten darf nicht gleich der Summe zweier sonstiger Pausenzeiten sein.

Es können auch die beiden den ersten und zweiten Sendeimpulsen zugeordneten Lichtstrahlen abgedeckt werden, wenn alle anderen Lichtstrahlen nicht abgedeckt werden. Dabei wird eine Summe aus den beiden Synchronisationspausen und einer weiteren Pausenzeit ausgewertet. Auch hier bleibt die optische Synchronisation des Lichtgitters erhalten. Die Summe der Synchronisationspausen muss immer eine charakteristische Zeit sein und darf nicht einem Vielfachen der restlichen Pausenzeit entsprechen.

Durch die Verwendung von nur einem Sendeimpuls pro Lichtstrahl können die Lichtstrahlen sehr schnell von der Empfängerauswerteeinheit ausgewertet werden. Durch Verkürzen der Sendeimpulszeit und der Synchronisationspausen auf kleinste auswertbare Zeiteinheiten für die Empfängerauswerteeinheit, kann eine Auswertung wesentlich verkürzt werden. Dadurch kann die Empfängerauswerteeinheit sehr einfach realisiert werden. Sendeimpulse gleicher Form und Dauer können aber auch als Mehrfachsendepulse ausgebildet sein. Dadurch wird das System unempfindlicher gegen Fremdlichteinflüsse.

In einer zweckmäßigen Weiterbildung ist es vorgesehen, die Sendersteuerung zum Ausgeben weiterer Synchronisationspausen anderer Dauer auszubilden. Dadurch ist es vorteilhaft möglich, die Synchronisation zwischen Sendereinheit und Empfängereinheit aufrechtzuerhalten beim Unterbrechen weiterer Lichtstrahlen.

In einer Weiterbildung der Erfindung ist die erste Synchronisationspause kürzer als die zweite. Dadurch sind die erste und zweite Synchronisationspause deutlich voneinander unterscheidbar. Dabei darf die Summe der beiden Synchronisationspausenzeiten nicht gleich der Summe zweier sonstiger Pausenzeiten sein. Die Synchronisationspausen bzw. die Summe der Synchronisationspausen muss immer eine charakteristische Zeit sein und darf nicht einem Vielfachen der restlichen Pausenzeit entsprechen.

Gemäß einer besonderen Ausführungsform ordnet die Senderansteuerung die erste Synchronisationspause und die zweite Synchronisationspause im Zyklus benachbarten Sendeelementen zu. Dies vereinfacht die Auswertung der empfangenen Sendeimpulse und Synchronisationspausen, da diese direkt aufeinanderfolgen. Die zwei im Zyklus zwar benachbarten Sendeelemente können örtlich an beliebiger Stelle im Lichtgitter angeordnet sein. Die zyklische Reihenfolge der Aktivierung muss also nicht der örtlichen Reihenfolge der Sendeelemente entsprechen. Vorteilhaft aber können die zwei Sendelemente z. B. an einem Ende des Lichtgitters angeordnet sein, dadurch werden diese bei entsprechender Montage des Lichtgitters in den meisten Anwendungsfällen nicht durch in einen durch die Lichtstrahlen gebildeten Überwachungsbereich eingebrachte Objekte unterbrochen.

Der auf ein Verfahren zum Synchronisieren von Sender- und Empfängereinheit eines Lichtgitters gerichtete Teil der Aufgabe wird erfindungsgemäß durch die kennzeichnenden Merkmale des Anspruchs 5 gelöst.

Im Folgenden wird die Erfindung an Hand von Ausführungsbeispielen unter Bezugnahme auf die Zeichnung im Einzelnen erläutert.

In der Zeichnung zeigt:
Figur 1
   eine schematische Darstellung eines erfindungsgemäßen Lichtgitters;
Figur 2
   eine schematische Darstellung von Sendeimpulsen und Synchronisationspausen;
Figur 3 bis 3b
   eine schematische Darstellung einer Anwendung zur Vermessung von Fahrzeugen mit dem erfindungsgemäßen Lichtgitter.

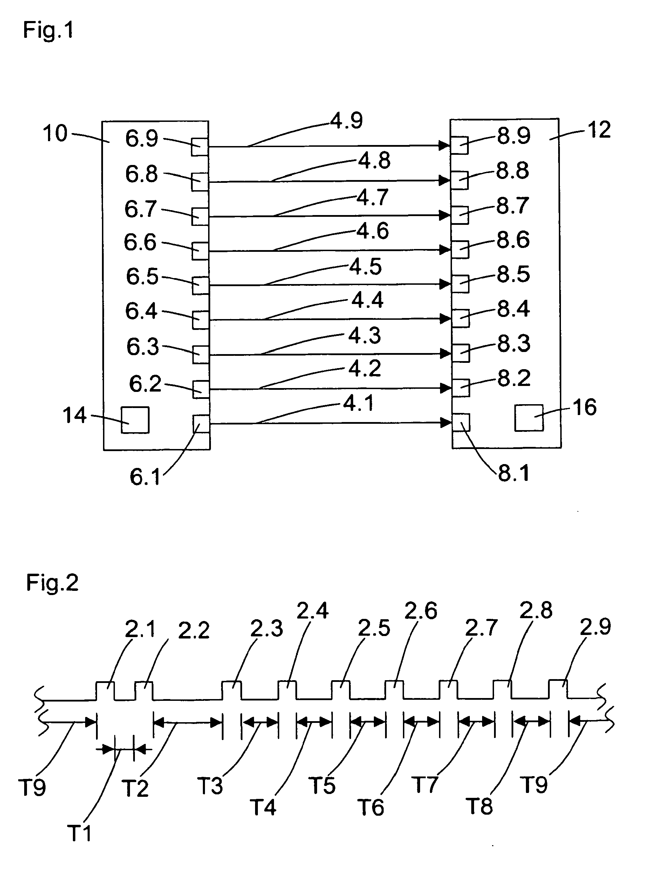

Figur 1 zeigt ein erfindungsgemäßes Lichtgitter bestehend aus einer Sendereinheit 10 mit Sendeimpulsen emittierenden, einzelnen Sendelementen 6.1 bis 6.9 und einer Empfängereinheit 12 mit einzelnen Empfangselementen 8.1 bis 8.9. Sendereinheit 10 und Empfängereinheit 12 sind dabei gegenüberliegend und beabstandet angeordnet und bilden zwischen sich einen Überwachungsbereich.

Jedes Sendeelement 6.1 bis 6.9 ist dabei paarweise einem Empfangselement 8.1 bis 8.9 zugeordnet. Die Sendeelemente 6.1 bis 6.9 werden von einer Senderansteuerung 14 zum zyklischen Senden von einzelnen Sendeimpulsen angesteuert. Die Sendeimpulse bilden dabei Lichtstrahlen 4.1 bis 4.9, die von den gegenüberliegenden Empfangselementen 8.1 bis 8.9 zyklisch empfangen werden.

Zum Auswerten der empfangenen Sendeimpulse ist eine Empfängerauswerteeinheit 16 angeordnet. Die Lichtstrahlen 4.1 bis 4.9 können teilweise durch Objekte unterbrochen werden, so dass an den entsprechenden Empfangselementen 8.1 bis 8.9 der Empfängereinheit 12 kein entsprechendes Signal empfangen werden kann. In diesem Fall soll eine Synchronisation der Empfängereinheit 12 auf die Sendereinheit 10 nicht verloren gehen. Ein Zyklus wird dabei für dieses Ausführungsbeispiel ausgehend vom ersten Lichtstrahl 4.1 festgelegt. Diese Festlegung kann beispielsweise auch für andere Lichtstrahlen 4.2 bis 4.9 festgelegt werden.

In Figur 2 sind schematisch die Sendeimpulse 2.1 bis 2.9 dargestellt. Ein Sendeimpuls 2.1 bis 2.9 wird dabei von je einem Sendeelement 6.1 bis 6.9 aus Figur 1 gesendet. Die Sendeimpulse 2.1 bis 2.9 entsprechen dabei den Strahlen 4.1 bis 4.9 aus Figur 1. Die Bezugszeichen in Figur 1, Figur 2 und den Figuren 3 bis 3a bezeichnen jeweils identische Teile. Die Sendeimpulse 2.1 bis 2.9 sind gleich lang und weisen die gleiche Form auf. Damit können die Sendeimpulse 2.1 bis 2.9 einfach ausgewertet werden.

Nach dem ersten und zweiten Sendeimpuls 2.1 und 2.2 sind eine zugehörige erste und zweite Synchronisationspause T1 und T2 vorgesehen. Die Synchronisationspausen T1 und T2 sind unterschiedlich lang zueinander ausgebildet und auch unterschiedlich lang zu den restlichen Pausen T3 bis T9. Die Pausen T3 bis T9 sind in ihrer Dauer gleich lang. Die Empfängereinheit 12 empfängt die Sendeimpulse und kann mit Hilfe dieser Synchronisationspausen T1 und T2 sich auf die Sendereinheit 10 synchronisieren, so dass jeweils ein Empfangselement einem Sendeelement zugeordnet ist und synchron dazu aktiviert werden kann.

Die Sendeimpulse 2.1 bis 2.9 können sehr einfach mit der Sendersteuerung 14 aus Figur 1 erzeugt werden. Die Sendersteuerung 14 besteht hierzu beispielsweise aus einem einfachen 8-Bit Microcontroller, einem Microcontroller der 8051-Familie, einem Peripheral Interface Controller (PIC), einer Generic Array Logik (GAL) oder einem einfachen Schieberegister. Durch die Sendersteuerung 14 werden nacheinander die Sendeelemente 6.1 bis 6.9 zur Erzeugung von Sendeimpulsen 2.1 bis 2.9 mit den zugehörigen Synchronisationspause T1 und T2 und den restlichen Pausen T3 bis T9 angesteuert. Die darauf synchronisierte Empfängerauswerteeinheit 16, die auch wie die Sendersteuerung einfach aufgebaut sein kann, werden die empfangenen Sendeimpulse 2.1 bis 2.9 und die Synchronisations- bzw. restlichen Pausen T1 bis T9 ausgewertet und je nach Anwendungsfall ein entsprechendes Signal ausgegeben, um beispielsweise nachgeschaltete Stellglieder zu aktivieren. Dabei können abhängig von der Anzahl und der Position der erfassten Lichtstrahlen 4.1 bis 4.9 verschiedene Stellglieder angesteuert werden.

Durch die Verwendung von nur einem Sendeimpuls 2.1 bis 2.9 pro Sendeelement 6.1 bis 6.9 und pro Zyklus (Figur 2), der Verwendung von gleichlangen Pausen T3 bis T9 und der Synchronisationspause T1 und T2 kann die durch Rechenzeiten bedingte Gesamtzeit des Zyklus auf ein Minimum reduziert werden. Eine Auswertung der empfangenen Lichtstrahlen kann dadurch in der kürzest möglichen Zeit erfolgen und entsprechende Stellglieder schnellstmöglich angesteuert werden.

Die Summe der beiden Synchronisationspausenzeiten T1 und T2 darf nicht gleich sein wie die Summe zweier sonstiger Pausenzeiten T3 bis T9. Die Synchronisationspausen T1 und T2 bzw. die Summe der Synchronisationspausen T1 und T2 muss immer eine charakteristische Zeit sein und darf nicht einem Vielfachen der restlichen Pausenzeit T3 bis T9 entsprechen.

Durch Abdecken einzelner oder mehrerer Lichtstrahlen 4.1 bis 4.9 wird die Empfängereinheit 12 immer noch aufgrund der beiden Synchronisationspausen T1 und T2 auf die Sendereinheit 10 synchronisiert, denn wenn auf eine der Synchronisationspausen nicht synchronisiert werden kann, kann eine Synchronisation mittels der anderen Synchronisationspause erfolgen.

Wird beispielsweise der Lichtstrahl 4.1 durch ein Objekt unterbrochen, so kann das Empfangselement 8.1 den zugehörigen Sendeimpuls 2.1 nicht mehr empfangen. Für die Synchronisation kann dann die erste Synchronisationspause T1 nicht ausgewertet werden. Jedoch empfängt das Empfangselement 8.2 den Sendeimpuls 2.2, so dass die zweite Synchronisationspause T2 für eine Synchronisation ausgewertet werden kann.

In Weiterbildung der Erfindung könnte zusätzlich die Empfangsauswerteeinheit 16 auch die Summe der Pause T9 und der Synchronisationspause T1 auswerten, so dass auf ein Zeitintervall, das sich aus T9 plus T1 plus der Dauer des Sendeimpulses 2.1 zusammensetzt, synchronisiert werden könnte.

In analoger Weise kann die Empfangsauswerteeinheit 16 die Summe der Synchronisationspausen T1 und T2 auswerten, wenn der Sendeimpuls 2.2 durch ein Objekt abgedeckt wäre.

Weitere Kombinationen bei anderen Strahlabdeckungen sind denkbar.

Die Synchronisation geht lediglich verloren, wenn zusätzlich zu den Sendeimpulsen 2.1 und 2.2 noch ein benachbarter Sendeimpuls 2.3 oder 2.9 abgedeckt wird. Nun ist keine eindeutige Zuordnung der charakteristischen Synchronisationspausen T1 und T2 mehr möglich.

Zusätzlich können auch wenigstens eine der restlichen Pausen T3 bis T9 aus Figur 2 eine charakteristische Dauer aufweisen, so dass eine solche Pause dann eine weitere Synchronisationspause bildet. Dadurch können mehr Lichtstrahlen als in dem obengenannten Beispiel abgedeckt werden, ohne dass die Synchronisation von der Empfängereinheit 12 auf die Sendereinheit 10 verloren geht.

Weisen alle Pausen T1 bis T9 charakteristische unterschiedliche Zeiten auf, so können alle Sendeimpulse 2.1 bis 2.9 bis auf minimal zwei beliebige verbleibende abgedeckt werden. Eine Synchronisation der Empfängereinheit 12 auf die Sendereinheit 10 ist immer gewährleistet.

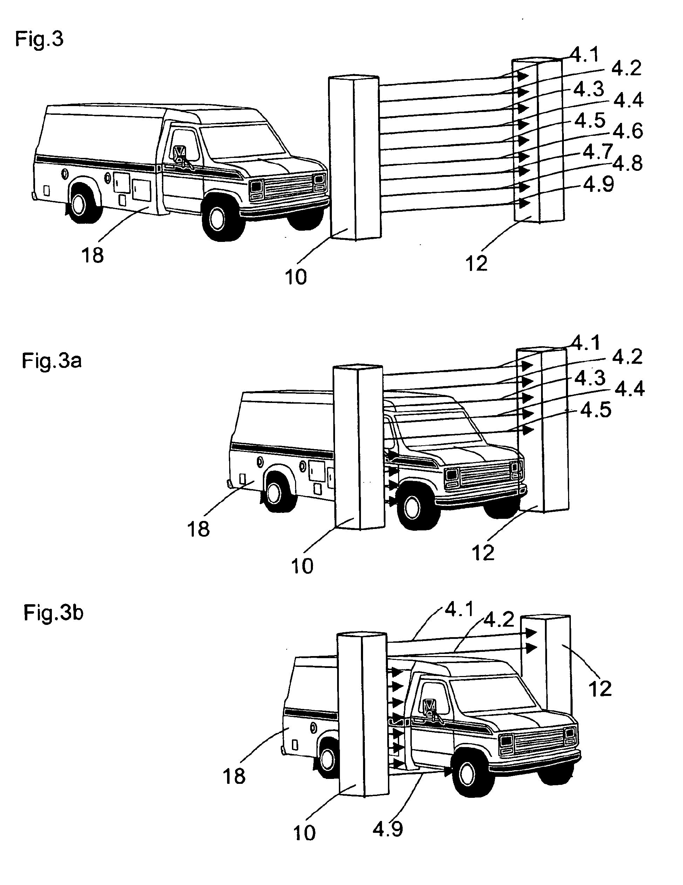

In Figur 3 bis 3b ist die Anwendung eines solchen Lichtgitters beispielhaft dargestellt. Das erfindungsgemäße Lichtgitter dient zur Erkennung von Fahrzeugen 18. Die Sendereinheit 10 und die Empfängereinheit 12 ist dabei an einer Durchfahrt für Fahrzeuge 18 angebracht. Alle Lichtstrahlen 4.1 bis 4.9 der Sendereinheit werden von der Empfängereinheit 12 empfangen und ausgewertet. Dabei werden die Sendeelemente beispielsweise entsprechend der Sendeimpulsfolge aus Figur 2 angesteuert. Je nach gewünschter Auflösung können auch Sendereinheit 10 und Empfängereinheit 12 mit einer größeren Anzahl von Sendeelementen und Empfangselementen ausgebildet werden, deren Abstände untereinander geringer sind, so dass eine höhere Auflösung erzielt wird. Nachfolgende nicht dargestellte Stellglieder oder Steuerungen sind mit der Empfängereinheit 12 verbunden. Zwischen der Sendereinheit 10 und der Empfängereinheit 12 bedarf es keiner elektrischen Verbindung.

Ein zu erkennendes Fahrzeug 18 fährt dabei in den Bereich zwischen Sendereinheit 10 und Empfängereinheit 12 ein. Bei der Einfahrt des Fahrzeugs 18 werden wie in Figur 3a dargestellt die Lichtstrahlen 4.6 bis 4.9 unterbrochen. Aufgrund der charakteristischen Synchronisationspausen zwischen den Sendeimpulsen für die Lichtstrahlen 4.1 und 4.2 ist eine Synchronisation zwischen Sendereinheit 10 und Empfängereinheit 12 weiterhin möglich. Nach einer weiteren Einfahrt sind alle Lichtstrahlen bis auf die verbleibenden Lichtstrahlen 4.1, 4.2 und 4.9 abgedeckt. Zur Synchronisation kann die Synchronisationspause zwischen dem Lichtstrahl 4.1 und 4.2 ausgewertet werden.

Bei einer Ausfahrt des Fahrzeugs 18 aus dem Bereich zwischen Sendereinheit 10 und Empfängereinheit 12 wird zunächst noch der Lichtstrahl 4.9 durch die hinteren Räder des Fahrzeugs 18 unterbrochen, wobei Lichtstrahl 4.1 und 4.2 weiterhin von dem Empfängereinheit 12 empfangen werden und eine Synchronisation zwischen Sendereinheit 10 und Empfängereinheit 12 erhalten bleibt.

### Bezugszeichenliste:

2.1 - 2.9 Sendeimpulse
4.1 - 4.9 Lichtstrahlen
T1 - T2 Synchronisationspausen
T3 - T9 Pausen
10 Sendereinheit
12 Empfängereinheit
18 Fahrzeug, Objekt
8.1 - 8.9 Empfangselemente
6.1 - 6.9 Sendeelemente
14 Sendersteuerung
16 Empfängerauswerteeinheit

## Patentansprüche

1. Lichtgitter mit einer Sendereinheit (10) mit mehreren Sendeelementen (6.1, 6.2, ...) und einer Empfängereinheit (12) mit mehreren Empfangsetementen (8.1, 8.2, ...), die mehrere zusammenarbeitende Paare bilden, die je aus einem Sendeelement und einem Empfangselement bestehen, und mit einer Sendersteuerung (14) sowie einer Empfängerauswerteeinheit (16), über welche die Paare zeitlich nacheinander zyklisch aktivierbar sind zum Aussenden und hierzu synchronen Empfang von Sendeimpulsen (2.1, 2.2, ...), wobei die Sendersteuerung (14) und die Empfängerauswerteeinheit (16) elektrisch voneinander entkoppelt sind, die Sendersteuerung (14) für jeden Zyklus zum Aussenden genau eines Sendeimpulses je Sendeelement ausgebildet ist, wobei alle Sendeimpulse (2.1, 2.2, ...) gleiche Dauer und Form aufweisen, und die Sendersteuerung (14) dazu ausgebildet ist, eine erste Synchronisationspause (T1) nach einem ersten Sendeimpuls (2.1) für ein Sendeelement im Zyklus auszugeben,
**dadurch gekennzeichnet,**
**dass** die Sendersteuerung (14) dazu ausgebildet ist, im selben Zyklus eine zweite Synchronisationspause (T2) nach einem zweiten Sendeimpuls (2.2) mit einer zur ersten Synchronisationspause (T1) verschiedenen Dauer auszugeben, und dass die Empfängerauswerteeinheit (16) in Abhängigkeit der ersten und zweiten Synchronisationspause im Zyklus auf diese erste und/oder zweite Synchronisationspause synchronisierbar ist.

2. Lichtgitter nach Anspruch 1, **dadurch gekennzeichnet, dass** die Sendersteuerung (14) zum Ausgeben weiterer Synchronisationspausen anderer Dauer nach weiteren Sendeimpulsen ausgebildet ist.

3. Lichtgitter nach einem der vorhergehenden Ansprüche, **dadurch gekennzeichnet, dass** die erste Synchronisationspause (T1) kürzer ist als die zweite (T2).

4. Lichtgitter nach einem der vorhergehenden Ansprüche, **dadurch gekennzeichnet, dass** die erste Synchronisationspause (T1) und die zweite Synchronisationspause (T2) im zyklus benachbarten Sendeelementen zugeordnet ist.

5. Verfahren zum Synchronisieren von Sende- und Empfängereinheit (10, 12) eines Lichtgitters, bei dem Sendeelemente (6.1, 6.2, ...) der Sendereinheit (10) zyklisch nacheinander aktiviert werden zum Aussenden von Sendeimpulsen (2.1, 2.2, ...) und zugeordnete Empfangselemente (8.1, 8.2, ...) der Empfängereinheit (12) synchron dazu aktiviert werden zum Empfangen der Sendeimpulse, wobei in jedem Zyklus genau ein Sendeimpuls je Sendeelement ausgesendet wird, wobei alle Sendeimpulse (2.1,2.2, ...) mit gleicher Dauer und gleicher Impulsform ausgesaudt werden, wobei zur Synchronisation nach einem im Zyklus ersten Sendeimpuls (2.1) eine erste Synchronisationspause (T1) vorgesehen ist, auf die die Empfängereinheit (12) synchronisiert wird, **dadurch gekennzeichnet, dass** im selben Zyklus eine zweite Synchronisationspause (T2) nach einem zweiten Sendeimpuls (2.2) vorgesehen ist und die zweite Synchronisationspause (T2) eine von der ersten Synchronisationspause (T1) verschiedene Dauer hat, wobei die Empfängerauswerteeinheit (16) in Abhängigkeit der ersten und zweiten Synchronisationpause im Zyklus auf die erste und/oder zweite Synchronisationspause synchronisiert wird.

6. Verfahren nach Anspruch 5, **dadurch gekennzeichnet, dass** weitere Synchronisationspausen anderer Dauer vorgesehen sind.

7. Verfahren nach einem der vorhergehenden Ansprüche 5 bis 6, **dadurch gekennzeichnet, dass** die erste Synchronisationspause (T1) kürzer ist als die zweite (T2).

8. Verfahren nach einem der vorhergehenden Ansprüche 5 bis 7, **dadurch gekennzeichnet, dass** die erste Synchronisationspause (T1) und die zweite Synchronisationspause (T2) im Zyklus benachbart sind.

## Claims

1. A light grid with a transmitter unit (10) having a plurality of transmitter elements (6.1, 6.2, ...) and with a receiver unit (12) having a plurality of receiver elements (8.1, 8.2, ...) forming a plurality of cooperating pairs which each comprise a transmitter element and a receiver element, and with a transmitter control (14) as well as a receiver evaluation unit (16) via which the pairs can be cyclically actuated sequentially in time for the transmission and reception synchronously therewith of transmission pulses (2.1, 2.2, ...), wherein the transmitter control (14) and the receiver evaluation unit (16) are decoupled from one another electrically, the transmitter control (14) is made for the transmission of precisely one transmission pulse per transmitter element for each cycle, wherein all the transmission pulses (2.1, 2.2, ..) have the same duration and shape and the transmitter control (14) is made to output a first synchronization pause (T1) after a first transmission pulse (2.1) for a transmitter element in the cycle,
**characterized in that**
the transmitter control (14) is made to output a second synchronization pause (T2) in the same cycle after a second transmission pulse (2.2) with a duration different from the first synchronization pause (T1); and **in that** the receiver evaluation unit (16) can be synchronized to this first and/or second synchronization pause in dependence on the first and second synchronization pauses in the cycle.

2. A light grid in accordance with claim 1, **characterized in that** the transmitter control (14) is made for the outputting of further synchronization pauses of different durations after further transmission pulses.

3. A light grid in accordance with any one of the preceding claims, **characterized in that** the first synchronization pause (T1) is shorter than the second (T2).

4. A light grid in accordance with any one of the preceding claims, **characterized in that** the first synchronization pause (T1) and the second synchronization pause (T2) is associated with adjacent transmitter elements in the cycle.

5. A method for the synchronization of a transmission and receiver unit (10, 12) of a light grid, wherein transmitter elements (6.1, 6.2, ...) of the transmitter unit (10) are activated cyclically in sequence for the transmission of transmission pulses (2.1, 2.2, ...) and associated receiver elements (8.1, 8.2, ...) of the receiver unit (12) are activated synchronously therewith for the reception of the transmission pulses, wherein exactly one transmission pulse per transmitter element is transmitted in each cycle, wherein all the transmission pulses (2.1, 2.2) are transmitted with the same duration and the same pulse shape, wherein a first synchronization pause (T1) is provided for the synchronization after a transmission pulse (2.1) first in the cycle, with the receiver unit (12) being synchronized to said first synchronization pause, **characterized in that** a second synchronization pause (T2) is provided after a second transmission pulse (2.2) in the same cycle and the second synchronization pause (T2) has a duration different from the first synchronization pause (T1), with the receiver evaluation unit (16) being synchronized to the first and/or second synchronization pause in dependence on the first and second synchronization pauses in the cycle.

6. A method in accordance with claim 5, **characterized in that** further synchronization pauses of different durations are provided.

7. A method in accordance with one of the preceding claims 5 to 6, **characterized in that** the first synchronization pause (T1) is shorter than the second (T2).

8. A method in accordance with any one of the preceding claims 5 to 7, **characterized in that** the first synchronization pause (T1) and the second synchronization pause (T2) are adjacent in the cycle.

## Revendications

1. Grille lumineuse comprenant une unité émettrice (10) avec plusieurs éléments d'émission (6.1, 6.2, ...) et une unité réceptrice (12) avec plusieurs éléments de réception (8.1, 8.2, ...) qui forment plusieurs paires coopérant ensemble, qui comprennent chacune un élément d'émission et un élément de réception, et une commande d'émetteur (14) ainsi qu'une unité d'analyse de récepteur (16), par laquelle les paires peuvent être activées les unes après les autres de façon cyclique pour l'émission et la réception, synchrone par rapport à l'émission, d'impulsions d'émission (2.1, 2.2, ...), la commande d'émetteur (14) et l'unité d'analyse de récepteur (16) étant dissociées électriquement l'une de l'autre, la commande d'émetteur (14) étant formée pour chaque cycle pour l'envoi exactement d'une impulsion d'émission par élément d'émission, et toutes les impulsions d'émission (2.1, 2.2, ...), présentant une durée et une forme identiques, et la commande d'émetteur (14) étant conçue pour éditer une première pause de synchronisation (T1) après une première impulsion d'émission (2.1) pour un élément d'émission dans le cycle,
**caractérisée en ce que**
la commande d'émetteur (14) est conçue pour éditer dans le même cycle une seconde pause de synchronisation (T2) après une seconde impulsion d'émission (2.2) avec une durée différente par rapport à la première pause de synchronisation (T1), et **en ce que** l'unité d'analyse de récepteur (16) peut être synchronisée en fonction des première et seconde pauses de synchronisation dans le cycle par rapport à cette première et/ou cette seconde pauses de synchronisation.

2. Grille lumineuse selon la revendication 1, **caractérisée en ce que** la commande d'émetteur (14) est conçue pour éditer d'autres pauses de synchronisation de durée différente après d'autres impulsions d'émission.

3. Grille lumineuse selon l'une quelconque des revendications précédentes, **caractérisée en ce que** la première pause de synchronisation (T1) est plus courte que la seconde (T2).

4. Grille lumineuse selon l'une quelconque des revendications précédentes, **caractérisée en ce que** la première pause de synchronisation (T1) et la seconde pause de synchronisation (T2) sont attribuées à des éléments d'émission voisins dans le cycle.

5. Procédé pour la synchronisation de l'unité d'émission et de l'unité réceptrice (10, 12) d'une grille lumineuse, dans laquelle des éléments d'émission (6.1, 6.2, ...) de l'unité d'émission (10) sont activés de façon cyclique les uns après les autres pour l'envoi d'impulsions d'émission (2.1, 2.2, ...) et des éléments de réception (8.1, 8.2, ...) attribués de l'unité réceptrice (12) sont activés de façon synchrone par rapport à la première unité pour la réception des impulsions d'émission, exactement une impulsion d'émission étant envoyée dans chaque cycle par élément d'émission, toutes les impulsions d'émission (2.1, 2.2, ...) étant émises avec une durée identique et une forme d'impulsion identique, une première pause de synchronisation (T1) étant prévue pour la synchronisation après une première impulsion d'émission (2.1) dans le cycle, pause sur laquelle l'unité réceptrice (12) est synchronisée, **caractérisé en ce qu'**une deuxième pause de synchronisation (T2) est prévue dans le même cycle après une seconde impulsion d'émission (2.2) et la seconde pause de synchronisation (T2) a une durée différente de la première pause de synchronisation (T1), l'unité d'analyse de récepteur (16) étant synchronisée en fonction des première et seconde pauses de synchronisation dans le cycle sur la première et/ou la seconde pause(s) de synchronisation.

6. Procédé selon la revendication 5, **caractérisé en ce que** d'autres pauses de synchronisation d'une autre durée sont prévues.

7. Procédé selon l'une quelconque des revendications 5 à 6 précédentes, **caractérisé en ce que** la première pause de synchronisation (T1) est plus courte que la seconde (T2) .

8. Procédé selon l'une quelconque des revendications 5 à 7 précédentes, **caractérisé en ce que** la première pause de synchronisation (T1) et la seconde pause de synchronisation (T2) sont voisines dans le cycle.
